# EUROPÄISCHE PATENTSCHRIFT

(11) **EP 2 544 165 B1**
(45) Veröffentlichungstag und Bekanntmachung des Hinweises auf die Patenterteilung: **10.06.2015**
(21) Anmeldenummer: 11173026.3
(22) Anmeldetag: 07.07.2011
(51) Int. Cl.: G09B 23/28

(54) **Lehrmodell zum Erlernen der Kariesbehandlung**
Teaching model for tuition of treatment of caries
Modèle servant à l'apprentissage du traitement de caries

(43) Veröffentlichungstag der Anmeldung: 09.01.2013
(73) Patentinhaber: Franz Sachs GmbH & Co. KG, 88069 Tettnang (DE)
(72) Erfinder: Stachniss, Vitus, Prof. Dr., 35094 Lahntal/Sarnau (DE); Jablonski-Momeni Anahita, Dr., 35037 Marburg/Lahn (DE); Schwarzbach, Hans, 35094 Lahntal/Gossfelden (DE)
(74) Vertreter: Riebling, Peter

(56) Entgegenhaltungen:
- EP-A1- 1 045 363
- EP-A1- 2 011 450
- EP-A2- 2 020 653
- US-A1- 2004 067 477

## Beschreibung

Die Erfindung bezieht sich auf einen Körper, der als Lehrmodell zum Erlernen der Behandlung an einem natürlichen Zahn verwendbar ist, nach dem Oberbegriff des Patentanspruches 1. Ein solches Lehrmodell ist zum Beispiel aus der EP 2020653 A2 bekannt.

Aus der DE 10 2004 046 658 A1 ist der schichtweise Aufbau eines solchen Körpers in Form eines dem natürlichen Zahn nachempfundenen Aufbaus zu entnehmen. Der Körper besteht dabei aus einem aus Kunststoff gefertigten Grundkörper. Auf der "Dentin-Schicht" liegt eine Schicht "Schmelz" analog dem natürlichen Zahn. An der der Zahnkrone gegenüberliegenden Seite des Lehrzahns ist eine pfahlförmige Zahnwurzel vorgesehen. Der Lehrzahn kann damit beispielsweise in einen Artikulator oder in einen Phantomkopf mit einem künstlichen Kiefermodell eingebaut werden, so dass die die Zahnbehandlung übenden Studierenden oder Auszubildenden eine den realen Bedingungen eines menschlichen Gebisses nachempfundene Situation vorfinden.

Solche schichtweise aufgebaute Lehrzähne haben sich in der Praxis zum Erlernen von Zahnbehandlungen bewährt. Es können an diesen Zähnen vorrangig invasive Behandlungstechniken (Präparationen) simuliert werden.

Jedoch können derartige Zähne nicht dazu verwendet werden, dass die Auszubildenden eine nichtinvasive Kariesbehandlung, die der Situation am menschlichen Zahn nachempfunden ist, üben können, denn solche Lehrzähne mit künstlich gefertigten Schmelzkaries-Läsionen sind trotz des Bedarfs in der zahnmedizinischen Ausbildung derzeit nicht bekannt.

Es ist daher Aufgabe der Erfindung, einen Körper der eingangs genannten Gattung zur Verfügung zu stellen, mit dessen Hilfe zunächst das Erkennen (Befund und Diagnostik) des Kariesbefalls geübt werden kann, um anschließend die Stellen, die den Kariesbefall simulieren, entweder klassisch invasiv zu therapieren oder mit einem nichtinvasiven Therapieverfahren zu behandeln.

Diese Aufgabe wird erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass in die Kunststoffschicht des Körpers eine oder mehrere Aufnahmetaschen (Kavität(en)) eingearbeitet bzw. vorgesehen ist oder sind, kann in diese ein Läsionskörper eingesetzt werden, durch den der Kariesbefall eines natürlichen Zahnes simuliert ist. Aufgrund der unterschiedlichen Materialeigenschaften der Kunststoffschichten des Körpers und des Läsionskörpers bzw. wenn der Läsionskörper mit einem Fluoreszenzfarbstoff gefüllt ist, kann mittels eines Diagnoseverfahrens von außen festgestellt werden, welche Form und welchen Verlauf der Läsionskörper innerhalb des Körpers aufweist, z. B. mit Röntgenverfahren oder, mittels Fluoreszenz, wenn ein Fluoreszenzfarbstoff in den Läsionskörper eingebracht wurde.

Ausgehend von dem erhobenen Befund und der gestellten Diagnose kann dann die Behandlungsmethode, die der Auszubildende zu erlernen hat, ausgeführt werden. Diese Behandlungsmethode entspricht der Kariesbehandlung an einem natürlichen Zahn, so dass die Auszubildenden mit Hilfe des erfindungsgemäßen Körpers sowohl Diagnoseverfahren als auch die durchzuführenden Therapievarianten, invasiv (Restauration) oder nichtinvasiv (Infiltration) eines mit Schmelzkaries befallenen natürlichen Zahnes erlernen können.

Da der Zahn auch in einen Artikulator oder in einen Phantomkopf mit einem Kiefermodell eingebaut werden kann, ist vorteilhafterweise gewährleistet, dass die Behandlungssituation den realen anatomischen Gegebenheiten nachempfunden ist.

Es ist besonders vorteilhaft, wenn der Körper aus zwei Teilkörpern aufgebaut ist, denn dann können eine oder mehrere Aufnahmetaschen in jeden der Teilkörper vorgesehen werden und die Läsionskörper sind von verschiedenen Seiten inspizierbar, so dass dann auch nach der erfolgten Behandlung visuell feststellbar ist, ob der Auszubildende den Läsionskörper aus dem diesen umgebenden Körper entweder vollständig entfernt hat oder den Läsionskörper mit einem Infiltranten durchtränkt und versiegelt hat. Dies ermöglicht somit eine visuell einfache Kontrolle, ob der Auszubildende tatsächlich die notwendigen Fertigkeiten besitzt, die verschiedenen Methoden der Kariesbehandlung durchzuführen.

In der Zeichnung ist ein erfindungsgemäßes Ausführungsbeispiel eines Körpers zum Erlernen der Behandlungsmethoden bei Kariesbefall eines menschlichen Zahnes dargestellt, der nachfolgend näher erläutert ist. Im Einzelnen zeigt:
- Figur 1: drei in einem Kiefermodell eingesetzte, als Zähne ausgebildete Körper, wobei in einem der Körper, eine Aufnahmetasche eingearbeitet ist, in die ein Läsionskörper zur Simulation des Kariesbefalls angeordnet ist, in perspektivischer Ansicht,
- Figur 2a: den Körper gemäß Figur 1 entlang der Schnittlinie IIa-IIa,
- Figur 2b: einen der Körper gemäß Figur 1 entlang der Schnittlinie,
- Figur 3a: zwei quaderförmige Körper die mit einer Klebefolie verbunden sind im Schnitt,
- Figur 3b: einen aufklappbaren Körper mit Läsionskörper in perspektivischer Darstellung,
- Figur 4a bis 4c: einen Verfahrensablauf zur Kariesbehandlung, der aus zwei Teilkörpern aufgebaut ist, die mittels einer Klebefolie lösbar sind,

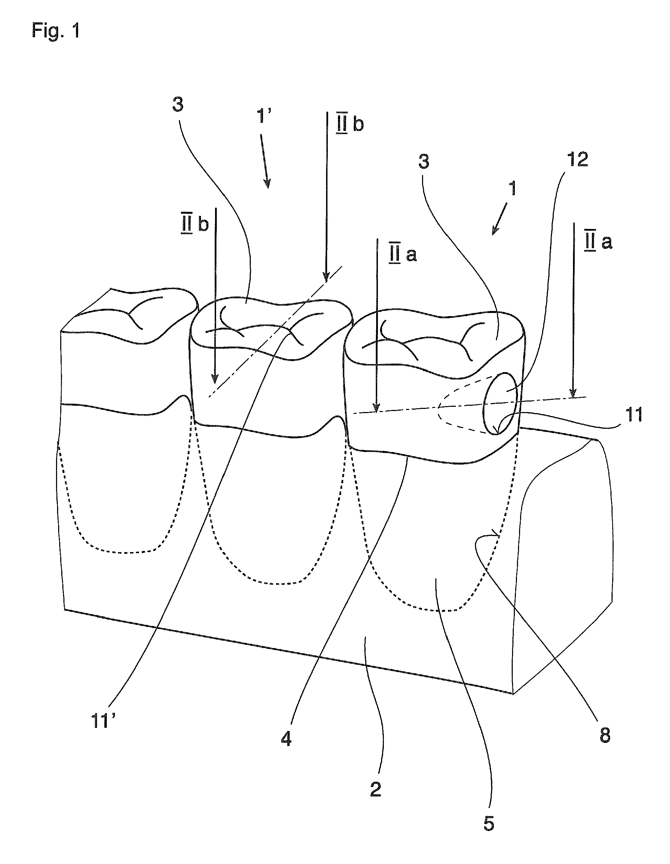

Aus Figur 1 ist ausschnittsweise ein künstliches Kiefermodell 2 zu entnehmen, in das mehrere Körper 1, 1' eingesetzt sind, um die anatomische Gebißsituation eines Menschen nachzubilden. Die Körper 1, 1'sind den natürlichen menschlichen Zähnen in Form und Schichtaufbau nachempfunden und lösbar in dem Kiefermodell 2 eingebaut. Die Körper 1, 1'dienen zum Erlernen der Kariesbehandlung an einem natürlichen Zahn und bilden somit ein Lehrmodell.

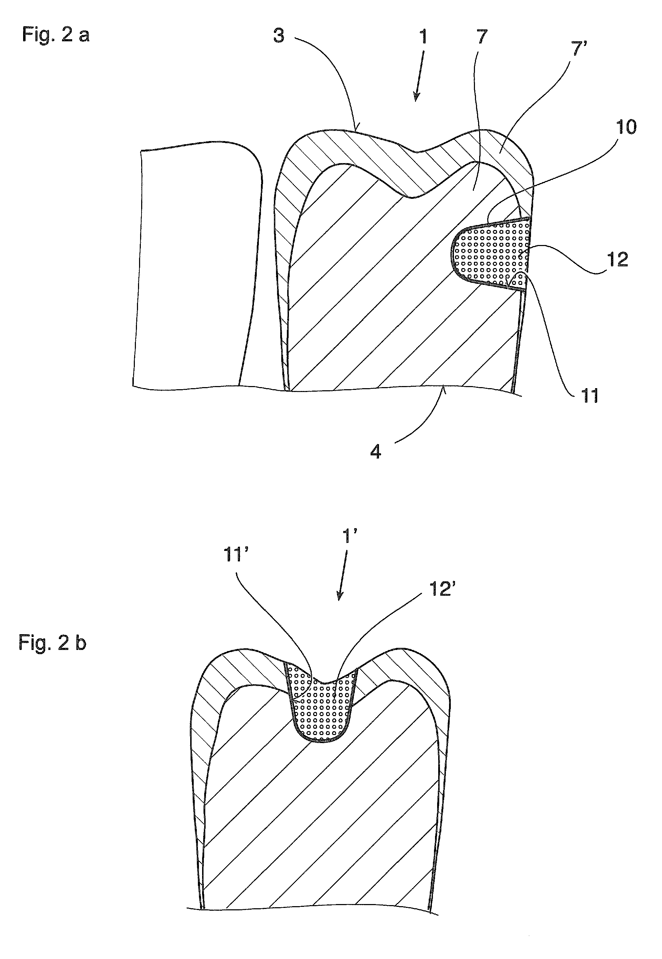

Der Körper 1 gemäß Figur 2a weist eine Oberseite 3, die als anatomische Zahnkrone mit der Kaufläche anzusehen ist, und eine gegenüberliegende Unterseite 4 mit einer Zahnwurzel 5 auf. Die Zahnwurzel 5 ist entweder als pfahlförmiger oder anatomischer Konus ausgeformt. In dem Kiefermodell 2 sind eine oder mehrere Klemmöffnungen 8 (Alveolen) vorgesehen, in die die jeweilige Zahnwurzel 5 eingerastet werden kann, um den Körper 1, 1' zuverlässig an dem Kiefermodell 2 zu fixieren. Das Kiefermodell 2 kann in einen Artikulator oder in einen Phantomkopf zur Simulation der realen Gebißverhältnisse eines Menschen eingesetzt werden.

Aus Figur 2a ist ferner ersichtlich, dass der Körper 1 aus einer oder mehreren, z.B. als Schmelz-, Dentin- und Pulpa-Simulation oder Kunststoffschichten 7, 7' und 7" aufgebaut ist, die fest, beispielsweise im Spritzgussverfahren, untereinander verbunden sind. Die Härtegrade der jeweiligen Kunststoffschicht 7, 7' ist in etwa dem Härtegrad eines menschlichen Zahnes nachempfunden; auch die Schichtdicke der jeweiligen Kunststoffschicht 7, 7' entspricht dem Schmelz-Dentin-Schichtaufbau eines natürlichen Zahnes.

In eine oder beide Approximalflächen und/oder die okklusale Kaufläche 3 sind bis zur Schmelz-Dentingrenze gemäß den Figuren 2a, 2b eine Aufnahmetasche 11 eingearbeitet. In die approximale Aufnahmenut 11 ist ein Schmelzläsionskörper 12 aus einem offenporigen mineralisch-keramischen Werkstoff eingesetzt. Der Läsionskörper 12 weist eine kegelstumpfförmige Kontur auf, die nahezu identisch mit der Innenkontur der Aufnahmetasche 11 ausgestaltet ist. Zwischen der Aufnahmetasche 11 und dem Läsionskörper 12 ist eine Klebeschicht 10 vorhanden, durch die der Läsionskörper 12 fest mit der jeweiligen Kunststoffschicht 7, 7', also dem Körper 1, verbunden ist.

Die Form und der Verlauf des Läsionskörpers 12 sowie die daran angepasste Innenkontur der Aufnahmetasche 11 ist in den Ausführungsbeispielen lediglich beispielhaft wiedergegeben. Jede beliebige geometrische Gestaltung des Läsionskörpers 12 ist möglich.

In die okklusale Aufnahmenut gemäß Figur 2b ist auf der Kaufläche eine als Fissurenkaries-Simulation zu bezeichnender Schmelzläsionskörper 12' aus einem dentalen, mit Fluoreszenzfarbstoff dotierten Kunststoff-Monomer mit mineralischkeramischem Füller eingebracht. Die Läsion 12' verläuft bis zur Tiefe der Schmelz-Dentin-Grenze 7' und weist im Querschnitt eine leicht birnenförmige Kontur auf. Die Aufnahmetasche 11' und der Läsionskörper 12' sind adhäsiv/klebend miteinander verbunden.

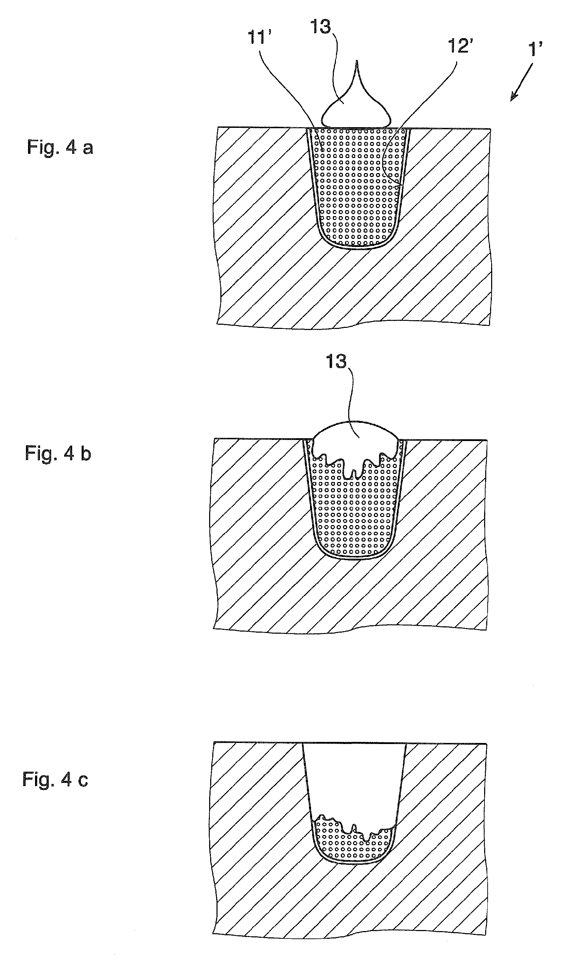

Die mikroporöse Struktur des Läsionskörpers 12 ermöglicht kapilläre Eigenschaften, durch die beispielsweise ein Monomer und Fluoreszenzfarbstoff 13 in den Läsionskörper 12' eindiffundieren können, bzw. durch Auftragen des Monomers mit Fluoreszenzfarbstoff 13 auf die Außenseite des Läsionskörpers 12' ist dieser mit dem Fluoreszenzfarbstoff 13 nach einer bestimmten Zeitspanne infiltriert. Dies ist zu den Figuren 4a bis 4c schematisch dargestellt.

Der die Kariesbehandlung erlernende Studierende oder Auszubildende sollte zunächst den Kariesbefall des künstlich hergestellten Körpers 1' befunden und diagnostizieren können. Insbesondere die Form und der Verlauf des Läsionskörpers 12' im Inneren des Körpers 1' sollte von dem Studierenden beispielsweise mittels eines auf Röntgenstrahlen basierenden Diagnoseverfahrens, erkannt werden.

Die Form und der Verlauf der Schmelz-Dentinläsion 12' der okklusalen Kaufläche 3 des Körpers 1' sollte beispielsweise mit einem Fluoreszenz basierten Diagnoseverfahren erkannt werden.

Nachdem die Diagnosen gestellt wurden, hat der Studierende die Option, den Schmelz-Dentin-Läsionskörper 12 oder 12' aus der okklusalen Aufnahmetasche 11, 11' beispielsweise mit einem rotierenden Instrument zu entfernen und eine Kariestherapie seiner Wahl auszuführen; z.B. erweiterte Fissurenversiegelung oder Füllung.

Aufgrund der Materialeigenschaften des approximalen Läsisionskörpers 12, 12' können die realen Kariesklassen der Stufen C2 / C3 nachgebildet werden.

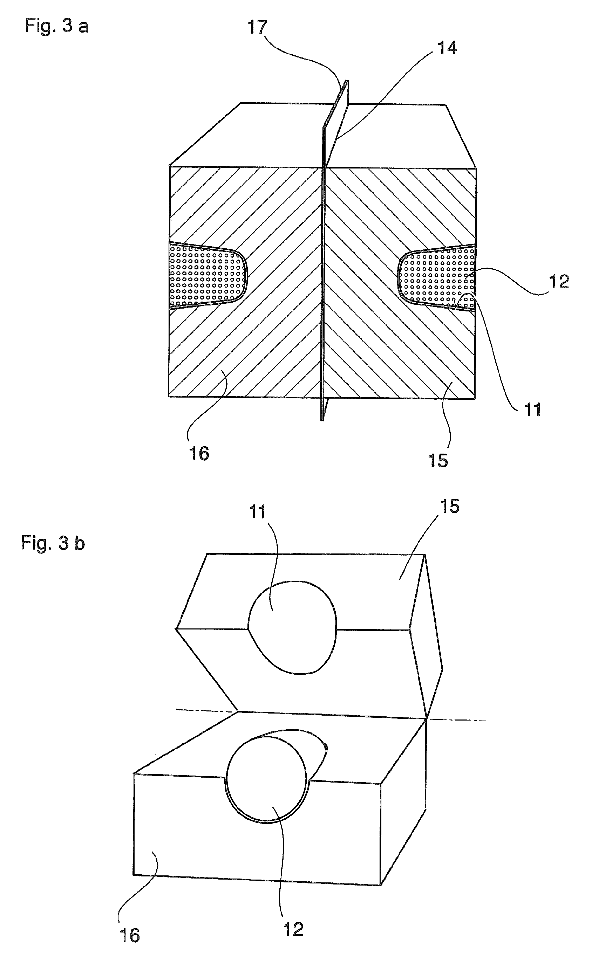

Aus Figur 3a ist ersichtlich, dass der Körper 1 aus zwei Teilkörpern 15 und 16 besteht, die als Quader ausgestaltet sind. Die beiden Teilkörper 15 und 16 sind im Bereich einer Trennebene 14 mittels einer Klebefolie 17 zunächst fest und bei Krafteinwirkung lösbar miteinander verbunden. Die beiden Teilkörper 15 und 16 weisen jeweils eine der Aufnahmetaschen 11 mit einem darin eingebauten Läsionskörper 12 auf.

In Figur 3b ist in die Teilkörper 15, 16 des Läsionskörpers 12' in der Trennschiene 14 eingebaut. Die Teilkörper 15, 16 sind zueinander aufklappbar angestellt, der Läsionskörper 12 besteht aus zwei symmetrischen Teilen, die in der Trennschiene 14 voneinander abgehoben werden können, um das Eindringen der Kunststoff-Monomer 13 zu kontrollieren.

Nachdem die beiden Teilkörper 15 und 16 voneinander getrennt wurden, kann festgestellt werden, ob die Behandlungsmethode zur Infiltration des Läsionskörpers 12 mit dem kapillargängigen mit Fluoreszenzfarbstoff dotierten Kunstharz-Monomer 13 zu dem gewünschten Behandlungserfolg geführt haben.

## Patentansprüche

1. Körper (1, 1'), der als Lehrmodell zur Simulation des Kariesbefalls an einem natürlichen Zahn verwendbar ist, bestehend aus mindestens einer Kunststoffschicht (7, 7'), deren Härtegrade jeweils dem natürlichen Zahn nachempfunden ist, wobei in die Kunststoffschicht (7, 7') eine oder mehrere Aufnahmetaschen (11, 11'), approximal und/oder okklusal eingearbeitet bzw. vorgesehen ist oder sind, dass in die jeweilige Aufnahmetasche (11, 11') ein aus einem mineralisch keramischen Werkstoff gefertigter Läsionskörper (12, 12') angeordnet ist, dessen Form und Größe dem Kariesbefall eines natürlichen Zahnes nachgebildet ist und dass der Läsionskörper (12, 12') fest mit der Aufnahmetasche (11, 11') verbunden ist, **dadurch gekennzeichnet, dass** der Körper (1. 1') aus zwei Teilkörpern (15, 16) mit jeweils einer Aufnahmetasche (11, 11') besteht, in denen der Läsionskörper (12) angeordnet ist und dass der Läsionskörper aus einem offenporigen mineralisch-keramischen Werkstoff gefertigt ist.

2. Körper nach Anspruch 1, **dadurch gekennzeichnet, dass** der Läsionskörper (12, 12') mit einem kapillargängigen mit Fluoreszenzfarbstoff (13) dotierten Kunststoff-Monomer gefüllt oder mit Fluoreszenzfarbstoff (13) dotierten Kunststoff-Monomer infiltrierbar ist.

3. Körper nach Anspruch 1 oder 2, **dadurch gekennzeichnet, dass** der mit Fluoreszenzfarbstoff (13) dotiertbare oder infiltriertbare Läsionskörper (12, 12') mittels eines invasiven Diganoseverfahrens, vorzugsweise mittels Röntgenstrahlen, von außen detektierbar ist und dass durch die Detektion des Läsionskörpers (12, 12') dessen Verlauf und Anordnung innerhalb des Körpers (1, 1') feststellbar ist und dotierte Areale zusätzlich mit nichtinvasiven Diagnoseverfahren, vorzugsweise Laser-Fluoreszenz, befundbar sind.

4. Körper nach Anspruch 3, **dadurch gekennzeichnet, dass** die den Körper (1, 1') bildenden Kunststoff-Schichten (7, 7') aus einer approximalen und/oder okklusalen Schmelz- und Dentin-Schicht aufgebaut sind, dass die Härtegrade der unterschiedlichen Kunststoff-Schichten (7, 7') dem schichtweisen Härtegrad des natürlichen Zahnes nachgebildet sind und dass der Läsionskörper (12, 12') okklusal und approximal die Schmelz-DentinGrenze (7, 7') durchdringt.

5. Körper nach einem der vorgenannten Ansprüche, **dadurch gekennzeichnet, dass** die Außenform des Körpers (1, 1') an die des natürlichen Zahnes angepasst ist.

6. Körper nach einem der vorgenannten Ansprüche, **dadurch gekennzeichnet, dass** unterhalb einer Unterseite (4) des Körpers (1, 1') eine pfahlförmige Zahnwurzel (5) oder eine anatomisch geformte Zahnwurzel (5) vorgesehen ist, durch die der Körper (1, 1') in ein Kiefermodell (2) oder in einen Phantomkopf mit herausnehmbaren Kiefermodell (2) einbaubar ist.

7. Körper nach einem der vorgenannten Ansprüche, **dadurch gekennzeichnet, dass** der Körper (1, 1') aus zwei, vorzugsweise asymmetrischen, **Teilkörpern** (15, 16) aufgebaut ist und dass der Läsionskörper (12, 12') von einer Außenseite (4) des Teilkörpers (15) in dessen Inneres verläuft und/oder dass der Läsionskörper (12') von der Trennebene (14) der beiden Teilkörper (15, 16) sich im Inneren eines der beiden Teilkörper (16) erstreckt.

8. Körper nach einem der vorgenannten Ansprüche, **dadurch gekennzeichnet, dass** die Trennebene (14) zwischen den beiden Teilkörpern (15, 16) mit einer Klebefolie (17) beschichtet ist, durch die die beiden Teilkörper (15, 16) fest miteinander verbunden sind.

9. Körper nach Anspruch 8, **dadurch gekennzeichnet, dass** die Teilkörper (15, 16) verschwenkbar mittels einer oder mehrerer Drehgelenke individuell verschwenkbar sind, und dass der Läsionskörper (12, 12') in der Trennebene (14) des Teilkörpers (15, 16) geschützt ist.

## Claims

1. Body (1, 1'), which can be used as a teaching model for simulating the occurrence of caries on a natural tooth, consisting of at least one plastics material layer (7, 7'), the degree of hardness of which in each case simulates the natural tooth, wherein one or more receiving pockets (11, 11') is or are incorporated or provided approximally and/or occlusally in the plastics material layer (7, 7'), in that a lesion body (12, 12') manufactured from a mineral-ceramic material is arranged in the respective receiving pocket (11, 11'), the form and size of which lesion body simulates the occurrence of caries on a natural tooth and in that the lesion body (12, 12') is rigidly connected to the receiving pocket (11, 11'), **characterised in that** the body (1, 1') consists of two part bodies (15, 16), each with a receiving pocket (11, 11'), in which the lesion body (12) is arranged, and **in that** the lesion body is manufactured from an open-pore mineral-ceramic material.

2. Body according to claim 1, **characterised in that** the lesion body (12, 12') is filled with a plastics material monomer doped with fluorescent dye (13) and capable of passing through capillaries or can be infiltrated with plastics material monomer doped with fluorescent dye (13).

3. Body according to claim 1 or 2, **characterised in that** the lesion body (12, 12') that can be doped or infiltrated with fluorescent dye (13) can be detected from outside by means of an invasive diagnostic method, preferably by means of X-rays, and **in that** owing to the detection of the lesion body (12, 12'), the course and arrangement thereof within the body (1, 1') can be determined and doped areas can additionally be detected with non-invasive diagnostic methods, preferably laser fluorescence.

4. Body according to claim 3, **characterised in that** the plastics material layers (7, 7') forming the body (1, 1') are constructed of an approximal and/or occlusal enamel and dentine layer, **in that** the degree of hardness of the different plastics material layers (7, 7') simulate the layer-wise degree of hardness of the natural tooth and **in that** the lesion body (12, 12') occlusally and approximally passes through the enamel-dentine boundary (7, 7').

5. Body according to any one of the aforementioned claims, **characterised in that** the external shape of the body (1, 1') is adapted to that of the natural tooth.

6. Body according to any one of the aforementioned claims, **characterised in that** a post-shaped tooth root (5) or an anatomically shaped tooth root (5) is provided below a lower side (4) of the body (1, 1'), by which root the body (1, 1') can be installed in a jaw model (2) or in a phantom head with a removable jaw model (2).

7. Body according to any one of the aforementioned claims, **characterised in that** the body (1, 1') is constructed of two, preferably asymmetrical, part bodies (15, 16) and **in that** the lesion body (12, 12') runs from an external side (4) of the part body (15) into the interior thereof and/or **in that** the lesion body (12') extends from the separating plane (14) of the two part bodies (15, 16) in the interior of one of the two part bodies (16).

8. Body according to any one of the aforementioned claims, **characterised in that** the separating plane (14) between the two part bodies (15, 16) is coated with an adhesive film (17), by means of which the two part bodies (15, 16) are rigidly connected to one another.

9. Body according to claim 8, **characterised in that** the part bodies (15, 16) are individually pivotable by means of one or more swivel joints and **in that** the lesion body (12, 12') is protected in the separating plane (14) of the part body (15, 16).

## Revendications

1. Corps (1, 1') qui est utilisable comme modèle d'enseignement pour stimuler la carie dont est atteinte une dent naturelle, composé d'au moins une couche de matière plastique (7, 7') dont les degrés de dureté reproduisent celui de la dent naturelle, étant précisé qu'une ou plusieurs poches de réception (11, 11') sont réalisées ou prévues dans la couche de matière plastique (7, 7') côté interproximal et/ou occlusal, qu'il est prévu dans chaque poche de réception (11, 11') un corps de lésion (12, 12'), fabriqué en matériau céramique minéral, dont la forme et la taille imitent la carie d'une dent naturelle, et que le corps de lésion (12, 12') est relié solidement à la poche de réception (11, 11'),
**caractérisé en ce que** le corps (1, 1') se compose de deux parties de corps (15, 16) avec chacune une poche de réception. (11, 11'), dans lesquelles est disposé le corps de lésion (12), et **en ce que** le corps de lésion est fabriqué en un matériau céramique minéral à pores ouverts.

2. Corps selon la revendication 1, **caractérisé en ce que** le corps de lésion (12, 12') est rempli avec un monomère de matière plastique apte à s'écouler dans des capillaires et additionné d'un colorant fluorescent (13) ou est apte à être infiltré avec un monomère de matière plastique additionné d'un colorant fluorescent.

3. Corps selon la revendication 1 ou 2, **caractérisé en ce que** le corps de lésion (12, 12') apte à être additionné ou infiltré d'un colorant fluorescent (13) est détectable de l'extérieur à l'aide d'un procédé de diagnostic invasif, de préférence des rayons X, et **en ce que** grâce à la détection du corps de lésion (12, 12'), le tracé et la disposition de celui-ci à l'intérieur du corps (1, 1') sont aptes à être établis et les zones additionnées sont en supplément aptes à être constatées avec des procédés de diagnostic non invasifs, de préférence par fluorescence laser.

4. Corps selon la revendication 3, **caractérisé en ce que** les couches de matière plastique (7, 7') qui forment le corps (1, 1') sont construites à partir d'une couche d'émail et de dentine interproximale et/ou occlusale, **en ce que** les degrés de dureté des différentes.couches de matière plastique (7, 7) reproduisent le degré de dureté par couches de la dent naturelle, et **en ce que** le corps de lésion (12, 12') traverse côté occlusal et côté approximal la limite émail-dentine (7, 7').

5. Corps selon l'une des revendications précédentes, **caractérisé en ce que** la forme extérieure du corps (1, 1') est adaptée à celle de la dent naturelle.

6. Corps selon l'une des revendications précédentes, **caractérisé en ce qu'**il est prévu, au-dessous d'un côté inférieur (4) du corps (1, 1'), une racine de dent (5) en forme de piquet ou une racine de dent (5) de forme anatomique grâce à laquelle le corps (1, 1') est apte à être monté dans un modèle de mâchoire (2) ou dans une tête factice à modèle de mâchoire (2) amovible.

7. Corps selon l'une des revendications précédentes, **caractérisé en ce que** le corps (1, 1') est construit à partir de deux parties de corps (15, 16), de préférence asymétriques, et **en ce que** le corps de lésion (12, 12') s'étend, à partir d'un côté extérieur (4) de la partie de corps (15), jusqu'à l'intérieur de celle-ci, et/ou **en ce que** le corps de lésion (12') s'étend, à partir du plan de séparation (14) des deux parties de corps (15, 16), à l'intérieur de l'une des deux parties de corps (16).

8. Corps selon l'une des revendications précédentes, **caractérisé en ce que** le plan de séparation (14) entre les deux parties de corps (15, 16) est recouvert d'un film adhésif (17) grâce auquel les deux parties de corps (15, 16) sont reliées solidement l'une à l'autre.

9. Corps selon la revendication 8, **caractérisé en ce que** les parties de corps (15, 16) sont aptes à pivoter individuellement à l'aide d'une ou plusieurs articulations tournantes, et **en ce que** le corps de liaison (12, 12') est protégé dans le plan de séparation (14) de la partie de corps (15, 16).
